(19) Europäisches Patentamt
European Patent Office
Office européen des brevets

(11) **EP 0 903 287 A2**

(12) **EUROPEAN PATENT APPLICATION**

(43) Date of publication:
**24.03.1999 Bulletin 1999/12**

(51) Int Cl.$^6$: **B63B 1/38**

(21) Application number: **98402084.2**

(22) Date of filing: **20.08.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: 22.08.1997 JP 226863/97
22.08.1997 JP 226864/97
09.12.1997 JP 354013/97
19.12.1997 JP 364299/97
04.02.1998 JP 36599/98
13.02.1998 JP 46355/98
06.04.1998 JP 93427/98
06.04.1998 JP 93428/98

(71) Applicants:
• **Ishikawajima-Harima Heavy Industries Co., Ltd.**
**Chiyoda-ku, Tokyo (JP)**

• **Kato, Hiroharu**
**Matsudo-shi, Chiba-ken (JP)**

(72) Inventors:
• **Takahashi, Yoshiaki**
**Setagaya-ku, Tokyo (JP)**
• **Yoshida, Yuki**
**Kawasaki-shi, Kanagawa-ken (JP)**
• **Kato, Hiroharu**
**Matsudo-shi, Chiba-ken (JP)**
• **Sato, Kazuo**
**Hiki-gun, Saitama-ken (JP)**

(74) Representative: **Ilgart, Jean-Christophe et al**
**c/o Société de Protection des Inventions,**
**25, rue de Ponthieu**
**75008 Paris (FR)**

(54) **Ship with reduced skin friction and gas jetting device for the same**

(57)    A ship (1) with reduced skin friction achieves its friction reducing effects by blowing out gas as micro-bubbles from gas jet outlets (4) into the water at the interface with the submerged surface (3) of the ship's hull (2). The ship (1) has laminar protrusion sections (5) on both lateral surfaces of its bulbous bow (6). The laminar protrusion sections (5) are integrally formed with and protrude from the outer plate (P) of the ship (1). At the apex region (5a) of the laminar protusion sections (5) a plurality of gas jet outlets are provided which are connected to a gas supply pipe (7).

FIG.1

## Description

BACKGROUND OF THE INVENTION

Field of the Invention

The present invention relates to a friction-reducing ship by injecting bubbles in the boundary layer formed on the hull surfaces with an on-board compressed air generation apparatus, and relates also to a friction reduction apparatus and air jetting device.

Description of the Related Art

Various methods have been proposed for reducing skin fiction of a cruising ship by having an injecting layer of bubbles or air on the hull surfaces. Some examples of the technologies based on jetting bubbles into water are: Japanese Patent Applications, First Publications: (1) S50-83992; (2) S53-136289; (3) S60-139586; (4) S61-71290; as well as in Practical Utility Model Applications, (5) S61-39691; and (6) S61-128185. In these technologies, bubbles are generated by ejecting compressed air, produced by air compressors, into water through numerous fine holes or through a porous material such as sintered polymers.

However, when jetting compressed air into water, there is a problems that the bubbles tend to float away from the hull surfaces, because of the lift force of floating bubbles, resulting in narrowing the range of friction reduction achievable. On the other hand, the technique of generating bubbles through a porous medium presents a problem that the energy consumption is high because of a pressure drop across the porous medium, resulting in a situation that any energy saving achieved by reducing skin fiction is negated by energy consumption required for bubble generation, thereby making practical application of the technology problematic. For these reasons, the technologies disclosed in references (1) through (6) have not been put into practice.

Also, methods for producing a mixture of micro-bubbles and water have been proposed. An example of such a technology is disclosed in a Japanese Patent Application, First Publication, H8-239083. In this technology, a bubble-water mixture generation device is provided on-board a ship in a suitable location to eject a bubble-water mixture containing micro-bubbles into water.

In such a technology, the diameter R of the jetting bubbles, air flow rate Q and main flow speed U are related through an expression:

$$R = k \, (Q/U)^{\frac{1}{2}} \qquad (1)$$

where k is a constant and a value of 2.4 is applicable in certain cases.

However, in the above expression (1), when the ship speed is constant (i.e., U = constant), it can be seen that increasing flow rate Q increases the bubble diameter R. This leads to diminishing effectiveness of micro-bubbles on the friction reduction action.

In the meantime, conventional methods of friction reduction require that the gas jet outlets be provided in a plurality of locations of the outer hull surfaces in order to blanket as much of the ship's submerged surfaces as possible with micro-bubbles. In this case, to supply a water-bubble mixture to individual gas jet outlets from a mixture generation apparatus, it is necessary to provide an extensive piping circuit. Friction-reducing ships cannot be produced at a relatively economic cost unless such extensive piping is simplified, because piping circuit represents a fairly significant cost of building a friction-reducing ship.

Also, because the static pressures on the submerged hull surfaces are different at various submerged locations, differences can sometimes occur in the bubble generating conditions. Therefore, it may also be necessary to vary the jetting conditions at various locations of the hull.

Further, for those bubbles which flow along the bottom surface (termed bottom-bubbles), the larger the bubble diameter the higher the lift force to press themselves against the bottom hull, resulting in producing high void fractions in the boundary layer to improve the friction reduction effects. However, for those bubbles flowing along the lateral hull surfaces (termed lateral-bubbles), the only force acting on the lateral-bubbles to attract them towards the hull surface is a lift force produced by the difference between the shear speed and the bubble speed (Saffman's Lift). This lift force is relatively weak, and the lateral-bubbles are easily floated off the surface. In other words, because the boundary layer thickness increases towards the stern of the ship so that, if the jetting conditions are optimized for the region of thick boundary layer, bubbles are ejected (dispersed) from the regions of thin boundary layer such that the flow fields around the hull surfaces become turbulent and friction reduction effects are diminished.

The direction of jets affects friction reducing effects also. In conventional friction-reducing ships, the direction of blowing compressed air is transverse to the water flow around the hull surface, and therefore, when the flow rate of compressed air becomes high, generated micro-bubbles are ejected out of the boundary layer. This composes one of the reasons why the flow fields around the hull surfaces to become turbulent, and could possibly lead increased resistance to cruising.

Friction reduction technology is adapted to practice by using an apparatus which is typically comprised as follows. A blower as a part of an air supply pipe for blowing compressed air is located below the level of waterline on a transplate near the bottom section of the bow. Compressed air is routed from the blower through a main flowmeter through a pressure gauge on a watertight seachest housing attached to the interior of the hull. The seachest contains a plurality of jetting devices made of numerous fine holes located at the bottom section of the ship, and the jetting devices are controlled so that the air blowing pressure is higher than the hydrostatic pressure by adjusting the flow valves.

In such a friction reduction apparatus, the blower is placed below the waterline to shorten the connecting pipes to the gas jet outlets, which means that, when the blower is stopped, the flow adjusting valves must be fully closed. If a situation should develop that the flow adjusting valves cannot be shut, water would back up into the blower, which means that, at the startup, gas jet outlets cannot be opened to water until the preparatory procedure is completed so that the flow adjusting valves are fully closed initially until the blower outlet pressure becomes higher than the external hydrostatic pressure. This is not only a cumbersome startup procedure, but presents other operational problems such as a requirement for constant monitoring of the blower operation so as to make certain that the internal chamber pressure inside the seachest is higher than the hydrostatic pressure.

Other practical adaptations of the micro-bubble technology include the use of micro-bubbles (produced by blowing compressed air generated by onboard compressors for example) from a bottom section of a ship into water to produce the micro-bubbles. Jetting devices include an arrangement in which an opening is provided on the bottom hull plate, and is closed by attaching a perforated plate having a plurality of suitably-spaced gas jet outlets (fine holes). The plate is housed in a watertight seachest housing provided on the interior of the bottom hull plate, and compressed air is supplied from an air supply pipe through gas pipes so that air under pressure can be expelled out of the gas jet outlets to produce the micro-bubbles. There are other proposals to produce the micro-bubbles by blowing air from a set of air jetting sections provided on the bottom hull plate by attaching porous plate at the gas jet outlets or providing gas jet outlets directly on the bottom hull plate.

One problem with the above types of friction reduction method is that, in order to blanket the bottom surface with the micro-bubbles along the bottom surface, it is necessary to provide gas jet outlets along the transverse direction, and each jet outlet must have its own seachest housing. Therefore, many seachest housings and associated piping are required, resulting in a manufacturing process that is not only time-consuming but costly.

Another problem with the conventional air jetting devices provided on the bottom hull plate is that, when mooring in a port, because air blowing is stopped, there is a concern over possible flooding of the seachest housing due to differential pressure between the hydrostatic and blower pressures. If flooding does occur, there are potential problems of marine organisms attaching themselves to the inside the seachest or perforated plates or salt precipitation, requiring thorough cleaning of the interior of the gas jet outlets.

Another problem with the conventional air jetting devices is that, because they are attached directly by welding to the openings provided on the bottom hull plate, the openings are not readily openable, making device maintenance difficult. Furthermore, although seachest interior can be serviced by removing all the fasteners around the periphery of the perforated plate covering the jet opening, it is necessary to detach and reattach a large number of fasteners for each location of jetting devices. Generally, there are many jetting locations along the transverse direction of the ship in order to blanket the entire bottom surface with micro-bubbles; when there are 26 locations of jetting devices along three transverse lines, for example, it can be understood that maintenance work for the entire interior spaces of the seachest housings require manual handling of a huge number of bolts, causing maintenance to be highly labor-intensive.

SUMMARY OF THE INVENTION

The primary purpose reducing the skin friction for a ship has been accomplished through several interrelated objectives of the present invention. Each objective will be presented separately in the following with a brief explanation of the means of achieving the objective.

The first objective is to provide a friction-reducing ship that enables to produce locally optimized friction-reducing effects which are unaffected by the gas flow rates.

The first objective is achieved in a friction-reducing ship having a laminar protrusion of a streamlined shape on the submerged outer hull plates, and the gas jet outlets are spaced apart on an apex region of the laminar protrusion, so that gas from gas jet outlets can be ejected into water to produce micro-bubbles.

Accordingly, the arrangement of the laminar protrusion section operating in conjunction with large gas flow rates enables to reduce skin friction, because of the ability to provide an effective control of the size of the generated micro-bubbles.

The second objective is to provide a friction-reducing ship and a compressed air generation apparatus which is able to control micro-bubble generation conditions at various locations of the friction-reducing ship, and to reduce ship building cost and the operating cost of the friction-reducing ship.

This objective is achieved in the friction-reducing ship in which each micro-bubble jetting device is manufactured as a unitized component including a portion of hull plate, and the micro-bubble jetting devices are produced by using a plurality of such unitized components.

The same objective is achieved in the compressed air generation apparatus in which a gas jetting device and the outer hull plate are made into a unitized component by joining a piping means for supplying the gas to the gas jet outlets.

According to this arrangement, the piping pattern is simplified, thereby further enabling to reduce the ship building cost.

The third objective is to reduce the ship building cost by reducing the number of steps required for installing the gas jetting device.

This objective is achieved by having a common seachest housing, assembled in a transverse direction to straddle longitudinal ribs laid along a bottom interior section of the ship, encloses a plurality of gas jetting sections disposed in a transverse direction so as to deliver compressed gas, to be ejected out from the gas jet outlets, to all the plurality of gas jetting sections through a common gas supply pipe.

Another arrangement is one in which a plurality of gas jetting sections are disposed at specific bottom locations along a transverse line, wherein all gas jetting sections are housed internally in a common seachest housing so as to be served by one air supply pipe.

Another arrangement is one in which a plurality of gas jetting sections are disposed at specific bottom locations along a transverse direction, housed in a transversely extending common seachest housing, made of a channel shaped steel sheet, assembled to pass through longitudinal ribs along a bottom section, and served by one gas supply pipe.

Another arrangement is one in which a plurality of gas jetting sections, for ejecting a compressed gas at specific bottom locations along a transverse direction, housed in a seachest housing comprised by a gas header connected to a gas supply pipe disposed so as to be above the transverse direction and higher than longitudinal ribs on a bottom section, and gas supply pipes connecting the gas header with the plurality of gas jetting sections.

These arrangements are effective in reducing the installation cost for the jetting devices by reducing the number of installation steps and other associated costs, because only one gas supply pipe and a common seachest housing are needed for a number of gas jet outlets.

The fourth objective is to provide gas jetting devices that require relatively low maintenance by facilitating opening and closing of the opening section.

This objective is achieved in a gas jetting section, comprised by a bottom opening provided on an outer bottom plate, a perforated covering plate for covering the bottom opening, and a seachest housing for enclosing the gas jetting section attached to an interior bottom plate so as to eject compressed air delivered through an air supply pipe from the gas jetting section, wherein a part of outer periphery of the perforated covering plate is attached to a periphery of the bottom opening so as to be freely swinging about a hinge means while remaining outer peripheries of the perforated covering plate are attached with removable fastener means.

Accordingly, the covering plate can be removed readily by undoing the fastening means such as bolts and letting the covering plate drop outward and down about the hinge to access the inside space for maintenance.

After completing the maintenance work, the opening is readily closed by up-swinging the covering plate back and securing it in place. The number of bolts required to seal the covering plate is reduced and the maintenance labor required is reduced.

In another similar arrangement of the gas jetting device, the perforated plate is provided with knobs integral with outer peripheral locations which are inserted into corresponding cutouts provided around a periphery of the support metal member and are rotated in an engaging groove extending in a circumferential direction for a secure closure of the bottom opening.

According to this arrangement, the covering plate can be attached or detached by simply rotating the covering plate held inside the engaging groove without the need to handle fastening devices, thereby further reducing the labor required in opening or closing the opening section.

The fifth objective is to provide a friction-reducing ship that enables to reduce skin friction by injecting the micro-bubbles into the boundary layer, even at high gas flow rates.

This objective is achieved in a friction-reducing ship having nozzle blocks of a given opening width assembled at specific locations of at least a bottom hull plate for producing micro-bubbles for reducing skin friction, wherein the nozzle block includes a bow-side wall and a stern-side wall of respective curvatures oriented towards a stern section of the ship, and a tangent to an exiting peripheral curvature of the stern-side wall coincides with an outer surface of the bottom hull plate.

Accordingly, because of the double arc structure of the nozzle block oriented towards the stern of the ship, the bubbles are ejected along the hull surface even at high gas flow due to the effect of centrifugal momentum imparted to the bubbles so that the micro-bubbles are injected into the boundary layer rather than at right angles to the boundary layer, thereby minimizing the bubbles ejected out of the layer, and retaining the micro-bubbles within the layer to enhance friction reduction.

The sixth objective is to provide a friction-reducing ship that produces highly effective friction reduction effects by allowing the micro-bubbles injected into the lateral boundary layer of the lateral hulls to dwell in the boundary layer as long as possible.

This objective is achieved in a friction-reducing ship for reducing skin friction by jetting gas into water from a plurality of longitudinal locations on a bottom section and from a plurality of locations in a vicinity of a bow section, and operating the gas jet outlets in such a way that lateral micro-bubbles, generated at lateral hulls and guided from the bow section to the stern section, are smaller than bottom micro-bubbles generated at bottom sections.

Accordingly, the lateral micro-bubbles are smaller than the bottom micro-bubbles so that the dwell times for the lateral micro-bubbles are increased to raise the average void fraction in the lateral boundary layer to improve the friction reduction effects.

The seventh objective is to provide a friction reduction apparatus that eliminates reverse flow of water into the blower when the friction-reduction ship is stationary without closing the gas flow adjusting valves, thereby eliminating the preparatory operation at the startup time, and also eliminating the need for monitoring the internal pressure of the seachest housing.

This objective is achieved in a friction reduction apparatus comprised by a gas supply pipe and a seachest housing provided on an interior bottom section below a full-load waterline and housing a plurality of gas jet outlets operating in association with gas flow adjusting valves to eject gas into water; wherein a mid-section of the gas supply pipe is positioned upright so as to be above the full-load waterline.

According to this apparatus, even when the blower operation and the supply of gas into the seachest housing are stopped, reverse flow of water into the blower is stopped at the waterline, because the mid-section of the gas supply pipe is located above the waterline, so that no water reaches the blower. Therefore, there is no need to shut the gas flow adjusting valve completely even when the ship is stationary, and gas supply is shut off, thereby greatly simplifying the operational procedure for the friction-reduction ship.

BRIEF DESCRIPTION OF THE DRAWINGS

Figure 1 is a perspective view of Embodiment 1.

Figure 2 is a horizontal cross sectional view of a laminar protrusion section of Embodiment 1.

Figure 3A and 3B are photographs showing micro-bubbles generated in friction reduction experiments with a laminar protrusion section in Embodiment 1.

Figure 4 is a graph of friction reduction ratio $C_f/C_{f0}$ and gas ejection distance in Embodiment 1.

Figure 5 is a perspective view showing details of a bubble unit in Embodiment 2.

Figure 6 is a side view of a friction-reducing ship in Embodiment 2.

Figure 7 is a side view of a variation of the friction-reducing ship presented in Embodiment 2

Figure 8A is a schematic perspective view of Embodiment 3.

Figure 8B is a plan view of Embodiment 3.

Figure 9A is an enlarged plan view of an air jetting section in Embodiment 3.

Figure 9B is a cross sectional view through a section A-A in Figure 6A.

Figure 10A is a first bottom view of another arrangement of the air jetting section in Embodiment 3.

Figure 10B is a second bottom view of another arrangement of the air jetting section in Embodiment 3.

Figure 10C is a third bottom view of another arrangement of the air jetting section in Embodiment 3.

Figure 11 is a side view of the bow section of the ship in Embodiment 4.

Figure 12 is an enlarged cross sectional view of section A shown in Figure 11.

Figure 13 is a cross sectional view through a section B-B in Figure 12.

Figure 14A is a side view in Embodiment 5.

Figure 14B is a bottom view of Embodiment 5.

Figure 15A is a side view of a lateral hull surface of a ship with a wire-method of generating micro-bubbles in Embodiment 5.

Figure 15B is a cross sectional side view of a lateral hull surface of a ship with a wire-method of generating micro-bubbles in Embodiment 5.

Figure 16 is a cross sectional side view of a lateral hull surface of a ship with another method of generating micro-bubbles in Embodiment 5.

Figure 17 is a cross sectional side view showing the configuration presented in Embodiment 6.

Figure 18 is a cross sectional side view showing another configuration in Embodiment 6.

Figure 19 is a schematic drawing of Embodiment 7.

Figure 20A is a perspective view of a variation of Embodiment 7.

Figure 20B is a cross sectional view through a section A-A in Figure 20A.

Figure 21A is a perspective view of Embodiment 8.

Figure 21B is a cross sectional view through a section B-B in Figure 21A.

Figure 22A is a cross sectional side view of Embodiment 8.

Figure 22B is a bottom view of Embodiment 8.

Figure 23 is an enlarged cross sectional view of an example of gas jet outlets in a perforated plate used in Embodiment 8.

Figure 24A is a cross sectional side view of a variation of Embodiment 8.

Figure 24B is a bottom view of the variation of Embodiment 8.

Figure 24C is an enlarged cross sectional view through a section A-A in Figure 24B.

Figure 25A is a side view of a jig used to detach the perforated plate used in Embodiment 8.

Figure 25B is a plan view of a jig used to detach the perforated plate used in Embodiment 8.

Figure 25C is an enlarged view of the pin used in the detaching jig used in Embodiment 8.

DESCRIPTION OF THE PREFERRED EMBODIMENTS

In the following, various preferred embodiments the present invention will be presented with reference to the drawings.

A. Embodiment 1

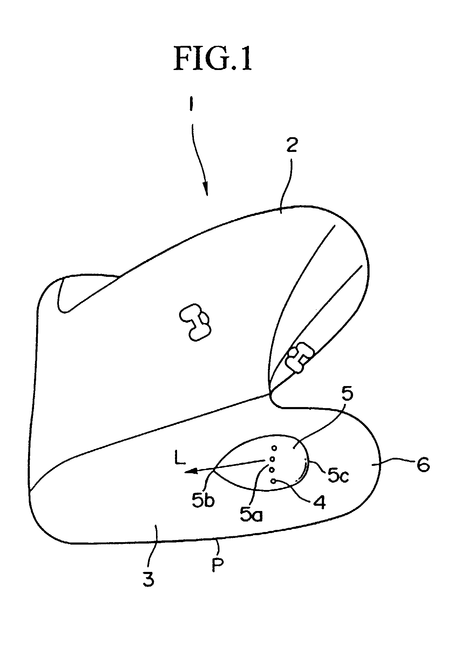

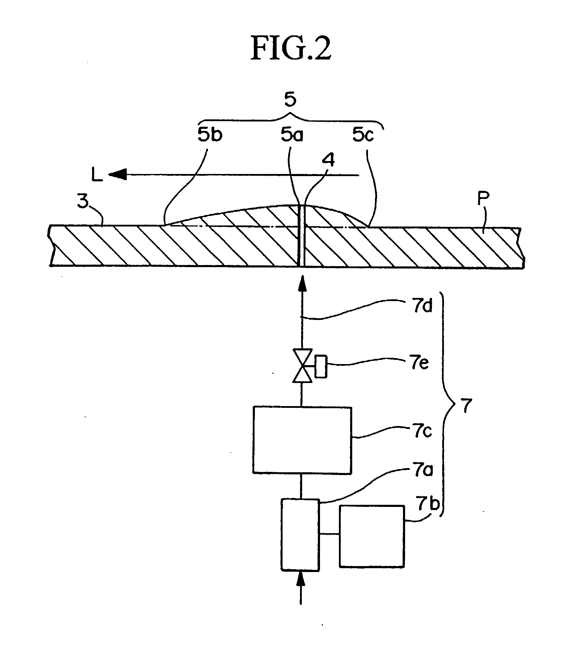

Embodiment 1 relates to a friction-reducing ship, and will be presented with reference to Figures 1~4. Figures 1 and 2 show a friction-reducing ship 1; ship's hull 2; submerged surface 3; gas jet outlets 4; a laminar protrusion section 5; a bulbous bow 6; a gas supply pipe 7; the waterline L; hull plates (outer plates) P.

The friction-reducing ship 1 achieves its friction reduction effects by blowing out gas as micro-bubbles from the gas jet outlets 4 into water at the interface with the submerged surface 3, and the friction-reducing ship 1 has the laminar protrusion section 5 integrally formed with the outer plate P of the friction-reducing ship 1 on both lateral surfaces of the bulbous bow 6. The laminar protrusion section 5 protrudes from the outer plate P, and a plurality of gas jet outlets 4, connected to the gas supply pipe 7, are provided at its apex region 5a.

The shape of the laminar protrusion section 5 has a streamlined protrusion profile, and its outline on the outer plate P is a tear-drop shape. The distance from the apex region 5a, along the flow line L through the center of the laminar protrusion section 5, to a downstream end 5b is longer than the distance from the apex region 5a to an upstream end 5c. At the apex region 5a of the laminar protrusion section 5 is provided with a plurality of evenly spaced gas jet outlets 4 extending at right angles to the flow line L. In the illustration shown in Figure 1, there are four gas jet outlets 4.

As shown in Figure 2, the gas supply pipe 7 is comprised by: a blower 7a for delivering air to the gas jet outlets 4; a drive section 7b for driving the blower 7a; an air chamber 7c disposed between the blower 7a and the gas jet outlets 4; and a pipe 7d and a one-way valve 7e injecting between the air chamber 7c and the gas jet outlets 4.

The friction-reducing ship 1 having such a friction-reducing structure operates as follows. During cruising, the friction reduction action is started by having the control center (not shown) issuing a command signal to blow out gas to the drive section 7b which starts the blower 7a to increase the internal pressure of the air chamber 7c by delivering intake air from an air intake opening (not shown). Increased pressure in the air chamber 7c results in opening of the one-way valve 7e, and air delivered through the pipe 7d is blown out from the gas jet outlets 4 into water to produce the micro-bubbles. The result is blanketing of the submerged surface 3 of the outer plate P at the bulbous bow 6 with the micro-bubbles, thereby reducing skin friction in the submerged surface 3.

When the friction-reducing ship 1 speed is a cruising speed, the micro-bubbles of desirable diameters in a range of 1~2 mm are generated by the air blown out of the gas jet outlets 4, because the laminar protrusion section 5 is protruding out of the outer plate P so that the distance of the laminar protrusion section 5 between the apex region 5a and the downstream end 5b is larger than the distance between the apex region 5a and the upstream end 5c.

Also, because of the gas jet outlets 4 are at right angles to the flow line L at the apex region 5a of the laminar protrusion section 5, the submerged surface 3 is effectively blanketed by the micro-bubbles produced from the gas jet outlets 4.

Further, because the laminar protrusion section 5 has a streamlined shape and its outer periphery is tear-drop shaped in the flow direction, the micro-bubbles can be ejected without encountering flow disturbance created by the laminar protrusion section 5.

In the meantime, when the friction reduction action is to be stopped, a command signal from the control center, the drive section 7b of the blower 7a is stopped. Stopping of the blower 7a causes the internal pressure in the air chamber 7c to decrease, and the one-way valve 7e become closed, and production of the micro-bubbles is stopped.

It is permissible to place the laminar protrusion section 5 in locations other than the bulbous bow 6.

Also, the gas blown to the air chamber can be a spent gas or an air admixture discharged from the onboard boilers of the friction-reducing ship 1.

Next, the results from a series of friction reduction experiments carried out using the friction measuring device shown in Figure 2 will be presented in the following.

Experimental parameters were as follows:

   a. height of the laminar protrusion section 5 was 5.24 mm;
   b. longitudinal length of the laminar protrusion section 5 was 50 mm;
   c. distance from apex region 5a to upstream end 5c was 14 mm;
   d. distance from apex region 5a to downstream end 5b was 38 mm;
   e. diameter of gas jet outlet 4 was 1 mm;
   f. number of gas jet outlets 4 was seven;
   g. width of flow path was 49.6 mm;
   h. distance from gas jet outlets 4 to measurement location (to be described later);
   i. section 1: 1.5 mm;
   g. section 2: 10 mm;
   l. section 3: 15 mm;
   h. section 4: 20 mm.

In these experiments, measurements were made on the same cross sectional shape in the horizontal flow path, and the seven gas jet outlets 4 were lined up on a straight horizontal line in the flow path. Measurement locations were designated by numbering the section by the distance from the gas jet outlets 4 such that the closest is section 1 and the farthest is section 4.

In these experiments, the air flow rate AFR was defined as in the following expression:

$$AFR = Q / (\delta \cdot l \cdot U) \qquad (2)$$

where Q is a gas flow rate; $\delta$ is an exclusion thickness in section l, 0.944 mm; $l$ is a flow path width; U is a main flow speed.

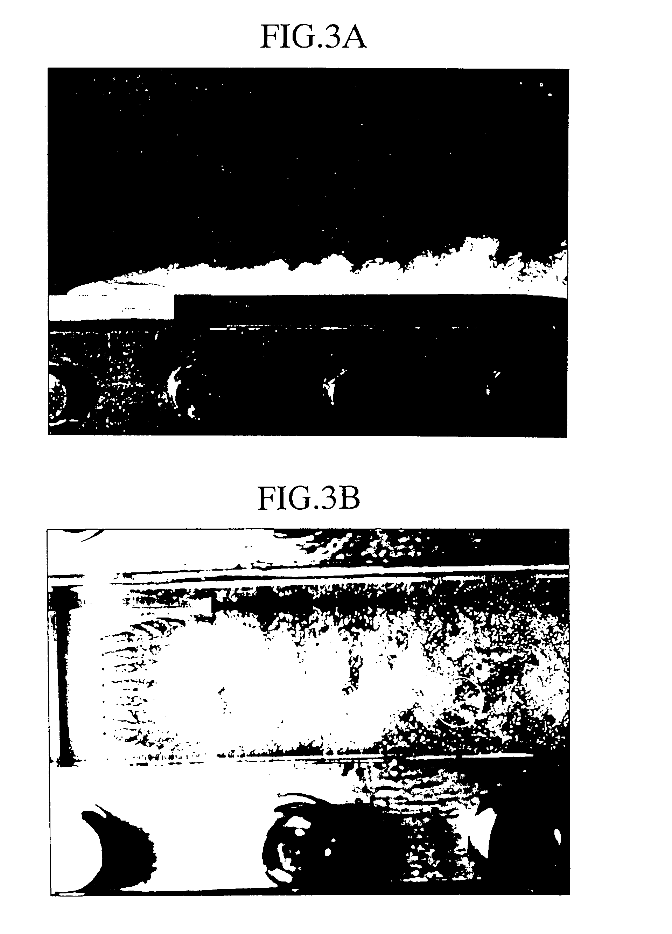

Experiments were carried out by blowing gas at different AFR from the gas jet outlets 4 as shown in Figure 3A, 3B so that the measuring surface was blanketed with the micro-bubbles, and by determining the friction reduction ratio $C_f/ C_{f0}$ (ratio of local friction coefficient with bubbles $C_f$ and local friction coefficient without bubbles $C_{f0}$).

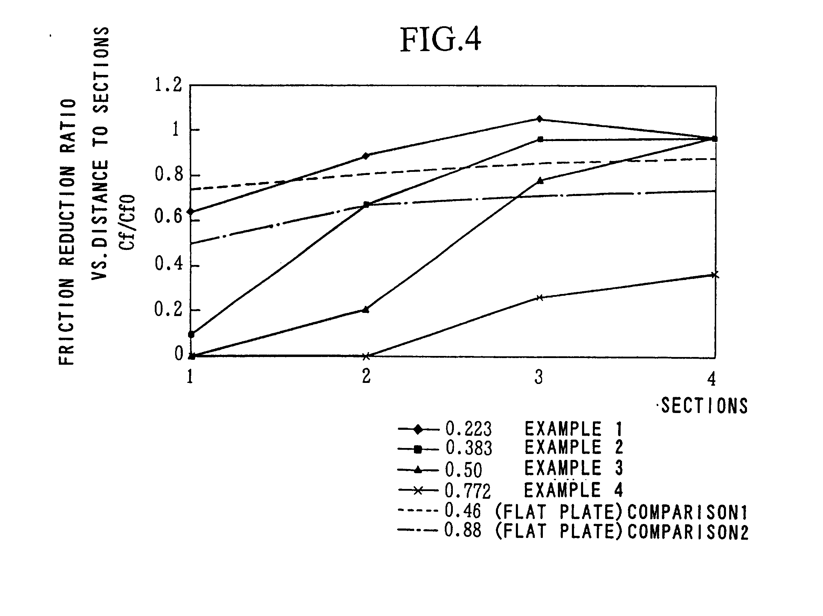

Some results are shown in Figure 4. These results were obtained under various AFR values as follows: 0.223 for Example 1; 0.383 for Example 2; 0.50 for Example 3; 0.772 for Example 4. The graph also shows comparison examples for a flat plate having no laminar protrusion section 5 at AFR of 0.46 for Comparison 1; 0.88 for Comparison 2.

The result in section 1 show that friction reduction ratios $C_f/ C_{f0}$ in Examples 1~4 are superior to those of Comparisons 1 and 2. Example 4 shows that even in section 4, the friction reduction ratio $C_f/ C_{f0}$ is far superior to those of the Comparisons 1 and 2. Therefore, by blanketing the submerged surface 3 in the downstream location of the laminar protrusion section 5, the micro-bubble jetting arrangement in these experiments enables to reduce skin friction locally.

B. Embodiment 2

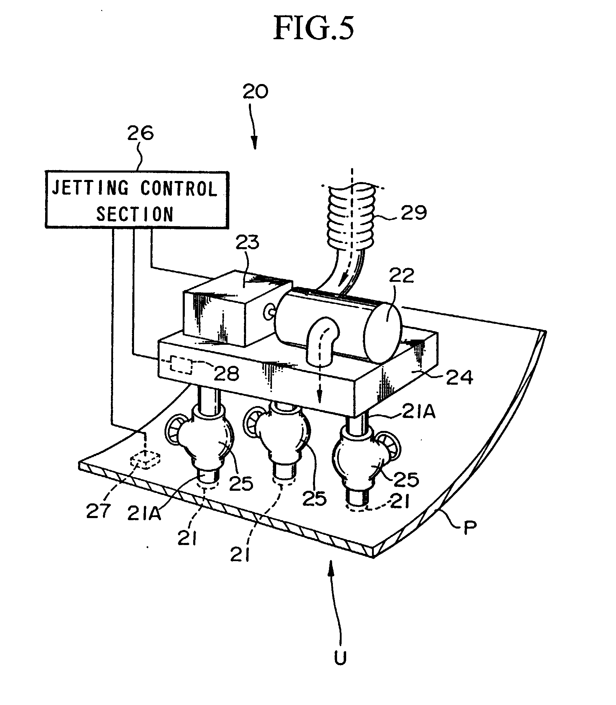

Embodiment 2 relates to a friction-reducing ship and a compressed air generation apparatus, and will be presented with reference to Figures 5~7.

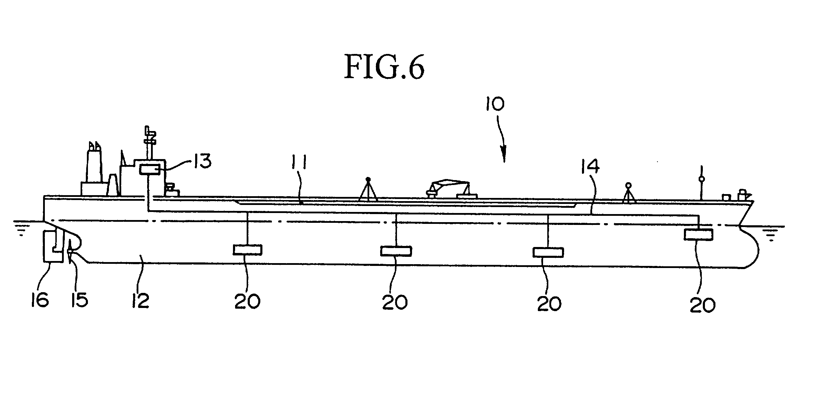

Figures 5 and 6 relate to a friction-reducing ship 10 comprised by: ship's hulls 11; submerged surface 12; a central command section 13; connection wiring 14; a screw 15; micro-bubble jetting devices 20; hull plates P; bubble units U.

The friction-reducing ship 10 achieves its friction reduction effects by blowing out gas as micro-bubbles from the submerged surface 12 and includes the micro-bubble jetting devices 20, the central command section 13 for controlling the operation of the micro-bubble jetting devices 20 which are formed integrally on parts of the hull plates P.

The central command section 13 outputs a start signal to the micro-bubble jetting device 20 to start blowing the micro-bubbles and a stop signal to cease blowing the micro-bubbles, and is hard-wired to the micro-bubble jetting device 20 to transmit those signals.

The micro-bubble jetting device 20 is comprised by: a plurality of air jet outlets 21 for blowing out bubbles; a blower 22 for delivering air to the air jet outlets 21; a drive section 23 for driving the blower 22; an air chamber 24 interposed between the blower 22 and the air jet outlets 21; a pipe 21A and a one-way valve 25 interposed between the air chamber 24 and each air jet outlet 21; a hydrostatic pressure measuring device 27 connected to the jetting control section 26 for measuring the external pressure around the air jet outlets 21; an air pressure measuring device 28 connected to the jetting control section 26 for measuring the internal pressure of the air chamber 24; the jetting control section 26 for controlling the operation of drive section 23 according to output data from the hydrostatic pressure measuring device 27 and the air pressure measuring device 28; and a flexible connecting intake pipe 29 to be connected to the intake side of the blower 22 for intaking of external air.

As shown in Figure 6, the micro-bubble jetting device 20 are positioned at several locations along the longitudinal direction of the lateral hull, and at least at the bow section of the friction-reducing ship 10 on the submerged surfaces 12 of both lateral hulls. The air jet outlets 21 of the micro-bubble jetting device 20 are provided for each air chamber 24 (three in Figure 5) and are attached to the hull plate P. The drive section 23 is connected to the jetting control section 26 and a power source (not shown). The air chamber 24 is a sealed structure of a rectangular cross sectional shape, and is disposed near the air jet outlet 21 so as to shorten the length of pipe 21A. The hydrostatic pressure measuring device 27 has a pressure gauge disposed near the hull plate P and a device to output data. The air pressure measuring device 28 has a pressure gauge disposed inside the air chamber 24 and a data output device. The connecting intake pipe 29 is connected to air intake opening (not shown).

Upon receiving a start signal from the central command section 13, the jetting control section 26 in each bubble unit U generates bubbles by controlling the operation of the drive section 23 over the blower 22 so as to maintain a condition that the internal air pressure in the air chamber 24 measured by the air pressure measuring device 28 is higher than the external hydrostatic pressure measured by the hydrostatic pressure measuring device 27. Upon receiving a stop signal from the central command section 13, the jetting control section 26, stops the blower 22 through the drive section 23.

The bubble unit U is manufactured separately from ship building operations for the friction-reducing ship 10 such that the separate components such as bubble jetting device 20, and a part of the hull plate P having the air jet outlets 21 is pre-fabricated as a compressed air generation apparatus to be delivered to the ship builder. Some bubbles units U are attached to the friction-reducing ship 10 at the ship building site by such means as welding of the hull plates P to those planned locations of bubble outlets on the ship's hulls 11 and are integrated into the operation of the friction-reducing ship 1 by wiring connections of the jetting control section 26 and piping of the connecting intake pipe 29 to the air intake opening.

The friction reduction operation of the friction-reducing ship 10 so constructed is carried out as follows. When the friction-reducing ship 10 reaches a cruising speed, friction reduction operation is started by the central command section 13 by issuing a start signal to the individual jetting control sections 26 through the wiring line 14. The jetting control section 26 outputs a drive signal to the drive section 23, and activates the blower 22 to deliver air from the connecting intake pipe 29 to increase the internal pressure of the air chamber 24. The pressure rise in the air chamber 24 opens the one-way valve 25, and the micro-bubbles are blown out from the air jet outlets 21 to blanket the submerged surfaces 12 of the ship's hull 11 to reduce skin friction.

For example, when the friction-reducing ship 10 is at a cruising speed, hydrostatic pressures along the ship's hull 11 can be different, therefore the external pressure is measured by the hydrostatic measuring device 27 and the measured results are reported to the jetting control section 26.

The jetting control section 26 operates the drive section 23 so as to produce the micro-bubbles of desired diameters of 1~2 mm, by controlling the internal pressure of the air chamber 24 to be higher than the external hydrostatic pressure and by maintaining the internal pressure of the air chamber 24 within a certain range.

When the friction reduction operation is to be ceased, the central command section 13 outputs a stop signal to the individual jetting control sections 26, which stops the blower 22 through the drive section 23. Stopping the blower 22 reduces the internal pressure of the air chamber 24 with respect to the external pressure and the one-way valve 25 begins to close and the generation of micro-bubbles is stopped. As mentioned in Embodiment 1, the gas used to pressurize the air chamber 24 may be spent gas from boilers or an air admixture.

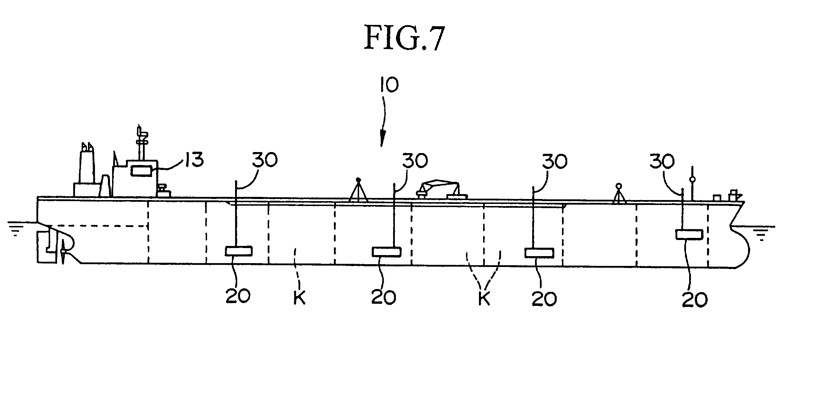

A variation of the friction reduction arrangement is shown in Figure 7. In this case, the micro-bubble jetting devices 20 communicate stop and start signals with the central command section 13 by wireless communication. The jetting control section 26 is provided with a hermetically sealed antennae 30, which may be placed on-deck. This type of communication arrangement reduces the cost of hard wiring.

The features of the embodiment are summarized below.

a. Air generation apparatus and associated hull plate are manufactured off-site as factory assembled units so that the units may be attached to the ship at the ship-building site by welding and other simple means. This procedure greatly improves precision of the devices and facilitates ship building operation.

b. Ship building cost is lowered by shortening the pipe length connecting the air chamber to the air jet outlets.

c. Because each air jet outlet is connected to the air chamber through its own one-way valve, the micro-bubbles can be started or stopped by operating the air chamber at a suitable constant pressure.

d. Each jetting control section can be operated to suit the hydrostatic pressure existing in respective local regions of the ship so that bubble generation condition can be selected to suit the different hydrostatic pressures existing locally.

e. Each jet outlet can be controlled separately by the jetting control section to generate optimum micro-bubbles, so that the operating cost can be reduced.

C. Embodiment 3

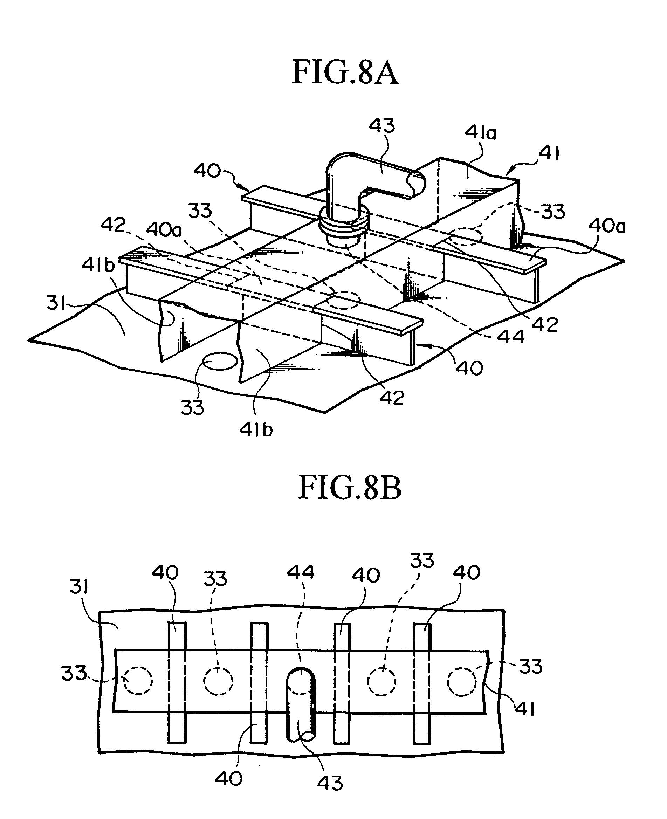

Embodiment 3 relates to a gas jetting device and will be presented with reference to Figures 8A~10C.

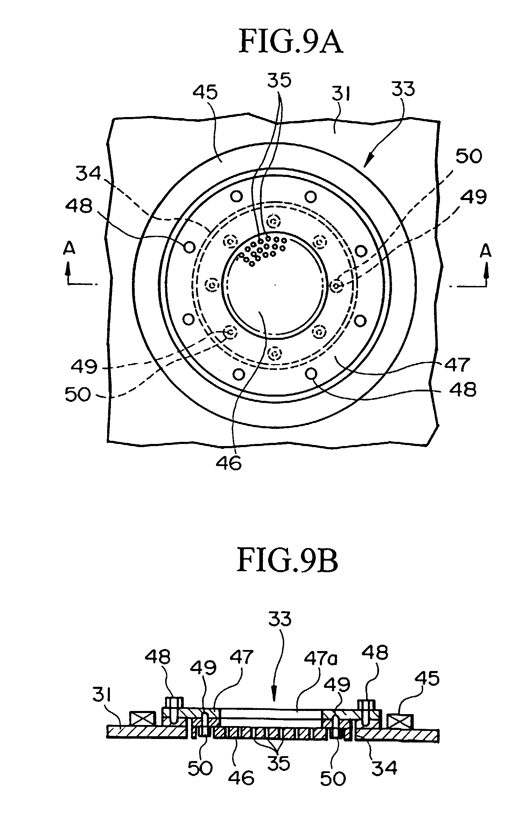

As shown in Figures 8A~9B, a plurality of air jetting sections 33 are arranged transversely across the width of the friction-reducing ship between each longitudinal rib 40 extending along the length of bottom hull plates 31 of the friction-reducing ship. The longitudinal ribs 40 are enclosed in a watertight seachest housing 41, made of channel shaped steel, straddling the longitudinal ribs 40 and extending transversely across the entire width of the friction-reducing ship and watertightly protects the air jetting sections 33 on the interior of the bottom hull plates 31. Compressed air is supplied from air supply pipe (not shown) to the seachest housing 41 through an air supply opening 44, located in a longitudinal mid-section of the top plate 41a of the seachest housing 41 and attached to the air supply pipe 43 of the air supply pipe. This arrangement distributes compressed air evenly to all the air jetting sections 33 within the seachest housing 41.

The seachest housing 41 is kept free of any debris which might clog up the air jetting section 33 by providing sufficient space so that the crew members can walk through under the longitudinal ribs 40 and the top surface 40a to keep the passages clear.

With reference to Figure 9A, the air jetting section 33 is comprised by a perforated plate 46 with numerous small air jet outlets 35 and attachment components including a support ring 47 and a reinforcing doubler ring 45. The attachment procedure is as follows. The support ring 47 is detachably attached to a circular opening section 34 provided on the bottom hull plate 31 together with the reinforcing doubler ring 45, from the inside of the bottom hull plate 31, as shown in Figure 9B. Then the perforated plate 46 is detachably attached, from the outside of the bottom hull plate 31, by means of stud bolts 49 extending from the bottom surface of the support ring 47 and capping nuts 50. The reinforcing doubler ring 45 may be made by welding half rings.

With reference to Figure 8A, assembly of seachest housing 41 is facilitated by providing a T-shaped cavity 42 on the side surface 41b of the bow-side and stern-side surfaces of the seachest housing 41. The T-shaped cavity 42 is made to fit the profile of the longitudinal rib 40 so that the cavity 42 may be fitted on the longitudinal rib 40 to slide the seachest housing 41 in the longitudinal direction along the longitudinal ribs 40 to install the seachest housing 41 over the air jetting sections 33.

Compressed air delivered from the air supply pipe to the seachest housing 41 through the air supply pipe 43 is distributed evenly in the transverse direction within the seachest housing 41 and are guided to individual air jetting sections 33 to be blown out from the air jet outlets 35 of the perforated plate 46 in the air jetting sections 33. Micro-bubbles blown into the boundary layer produce void fractions and blanket the wide area of the bottom hull surface.

The seachest housing 41 is distributed across the entire width of the friction-reducing ship so that all the air jetting sections 33 provided on the bottom hull plate 31 can be housed within to be shared among the many air jetting sections 33. Therefore, there is no need to provide an individual seachest housing 41 for each air jetting section 33 as required in the conventional design. Also, because the seachest housing 41 is communicated transversely with all the air jetting section 33, only one air supply pipe 43 is sufficient to satisfy the air supply requirement. Therefore, assembly steps for the seachest housing 41 and the air supply pipe 43 are reduced significantly thereby lowering the installation costs.

Also, although seachest housing 41 is not provided individually to strengthen each air jetting section 33, the periphery of the opening section 34 to attach the perforated plate 46 is reinforced by attaching the reinforcing doubler ring 45. Therefore, even if the opening section 34 is enlarged, design strength can easily be achieved.

Further, the perforated plate 46 of the air jetting section 33 can be placed in position through the support ring 47 to the bottom hull plate 31 with the worker facing downward in a relaxed position, and after the positioning step, attaching or detaching operation is carried out from the exterior of the friction-reducing ship by installing the capping nuts 50. Therefore, if the air jet outlets 35 should become clogged, any maintenance work or exchange operation can be carried out quite readily.

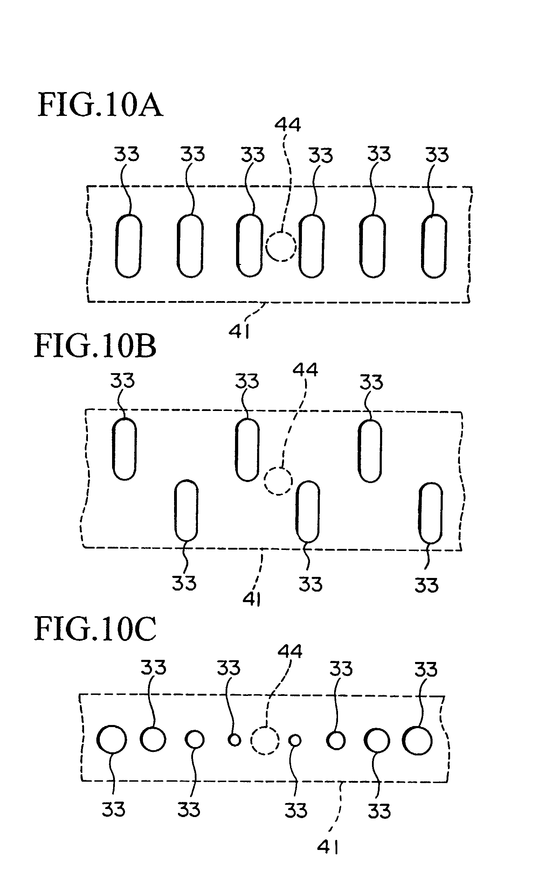

A variation of Embodiment 3 will be presented with reference to Figures 10A~10C. Figure 10A shows elongated air jetting sections 33 extending in the longitudinal direction of the friction-reducing ship. Figure 10B shows a staggered arrangement of the elongated airjetting sections 33 in the lateral direction. Figure 10C shows an arrangement in which the area of the air jetting section 33 is gradually made larger from the center towards the transverse end of the friction-reducing ship.

The configuration shown in Figure 10A will provide a larger flow of compressed air compared with the configuration shown in Figure 8A or 8B. The configuration shown in Figure 10B is advantageous from the viewpoint of the strength of the friction-reducing ship. The configuration shown in Figure 10C will provide a uniform flow rate in the lateral direction.

Embodiment 3 is not limited to the exemplified cases, other possible variations are presented below.

　　a. The shape and area of the air jetting section 33 can be changed freely so as to obtain a desired type blanketing action of the micro-bubbles.
　　b. A single seachest housing was provided in the lateral direction, but it is permissible to divide the housing 41 into sections by placing a divider between sections or by making separated section, or each section may communicate with more than two air jetting sections.
　　c. Each divided section may be provided with air supply pipe, or different sections may blow out compressed air at different air flow rates.
　　d. The air jetting sections 33 may use traditional porous plates instead of the perforated plate 46, or the air jetting sections 33 may be installed directly on the bottom hull plates 31.

The features of Embodiment 3 are summarized as follows.

　　a. A number of jetting sections are arranged transversely across the width of the bottom section of the friction-reducing ship, and a common seachest housing straddling the longitudinal ribs is used to distribute compressed air to all the air jetting sections. Therefore, common seachest housing and air supply are shared among the number of seachest housing so that effort required in installing the friction reduction apparatus is reduced compared with the conventional methods, enabling to reduce the installation cost.
　　b. By dividing the seachest housing into a number of sections, and arranging air supply separately to each section to serve more than two air jetting sections, each section is able to control the flow rate of compressed air to suit local conditions.
　　c. Because the air jetting section is comprised by an opening section provided on the bottom hull plate and detachable perforated plate or porous plate, maintenance of air jetting sections is facilitated.
　　d. Because the air jetting section is comprised by a combination of support ring and a reinforcing doubler ring, the strength of the opening section is maintained and design strength can easily be achieved.

D. Embodiment 4

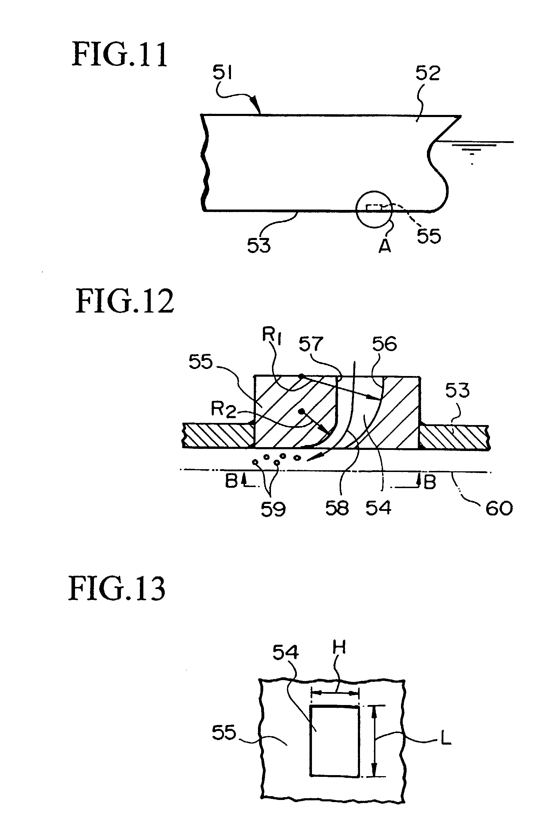

Embodiment 4 relates to a friction-reducing ship and will be presented with reference to Figures 11~13.

In this embodiment of friction-reducing ship 51, the micro-bubbles 59 are produced from a jet outlet 54 of certain opening width H and opening length L made in a nozzle block 55 provided on the bottom hull plate 53 at the bow section 52 of the friction-reducing ship 51. The nozzle block 55 is designed so that the front wall surface 56 and the rear wall surface 57 of air jet outlet 54 are curved in double arc towards the stern section, and the tangent at the exit periphery of the rear wall surface merges with the outer surface of the bottom hull plate 53. Compressed air is supplied to the jet outlets 54 so that the micro-bubbles 59 will be blown into the boundary layer 60 formed at the ship/water interface.

The radius of curvature R1 of the front wall surface 56 is either R1>R2 or R1=R2 where the radius of curvature R2 is radius of curvature of the rear wall surface 57 of the jetting section 54 (in Figure 12, R1>R2).

When the mikro-bubbles 59 are produced by jetting the compressed 58 air through the jet outlet 54 in the nozzle block 55, the generated micro-bubbles 59 are injected into the boundary layer 60, thereby enabling to blanket the bottom surface with the micro-bubbles 59 and producing voids formed by the micro-bubbles 59, thereby enabling to reduce skin friction of the friction-reducing ship 51.

In the above jetting configuration, because both front and rear wall surfaces 56, 57 are curved in a double arc shape towards the stern section, and the tangent to the rear wall surface 57 matches with the outer surface of the bottom hull plate 53, the bubbles are subjected to centrifugal force, even at a high flow rate of compressed air 58, to direct the bubbles along the surface of the bottom hull plate 53. This jetting pattern helps to deliver more micro-bubbles 59 into the boundary layer 60 by reducing the amount of micro-bubbles 59 which are ejected out of the boundary layer 60.

The width H of the jet outlet 54 can be adjusted by changing the relative position of the centers of radii of curvatures of the front and rear wall surfaces 56, 57. The length L of the jet outlet 54 is determined in conjunction with the amount of air flow required to produce the micro-bubbles 59 of a targeted size range.

In the above embodiment, the air jet outlets 54 were provided on the bottom hull plate 53, but they can be provided on the lateral hull plates. However, in such a case, because the lateral micro-bubbles are only acted on by the lift force, and are not attracted towards the lateral hull surface so that it is necessary to generate micro-bubbles of smaller size than those at the bottom section so as to delay as much as possible the separation of the micro-bubbles away from the lateral surface.

The feature of Embodiment 4 are summarized as follows.

a. Because of the special surface shapes provided for the front and rear wall surfaces of the jet outlet in the nozzle block and the merging configuration of the rear wall surface with the bottom plate, the bubbles are directed under centrifugal force and are effectively delivered into the boundary layer formed along the bottom surface.

b. Because the arrangement of the jet outlet and air ejection direction, the micro-bubbles are effectively prevented from being ejected out of the boundary layer, thereby enabling to achieve maximum reduction in skin friction, and provide a significant increase in the cruising efficiency.

c. The width of the jet outlet can be adjusted by arranging the radius of curvatures to be R1>R2 or R1=R2, and changing the relative locations of the centers of radii of curvatures R1 and R2.

E. Embodiment 5

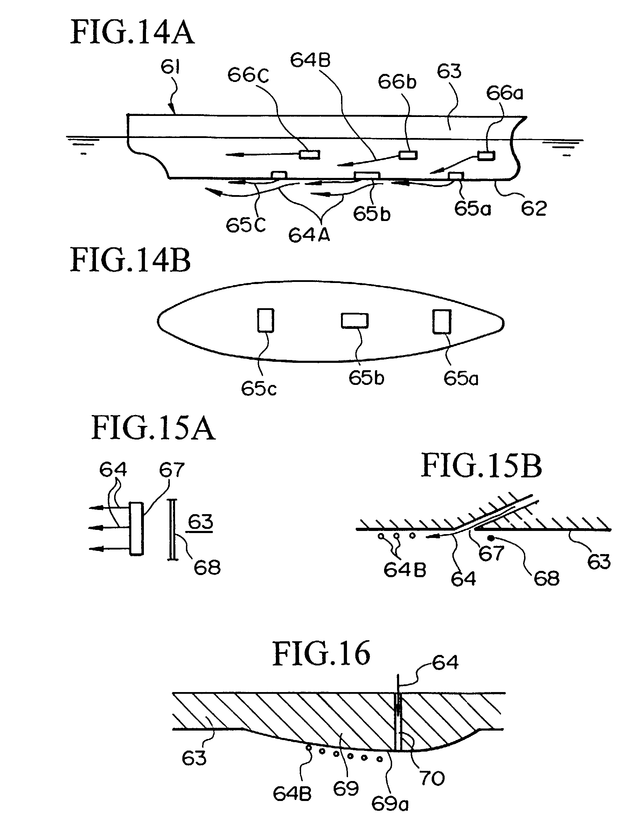

Embodiment 5 relates to a friction-reducing ship and will be presented with reference to Figures 14A~16.

Figures 14A, 4B show bubble generation devices located in two different locations of a friction-reducing ship 61: one set of devices are located on the bottom section 62 (three shown in Figure 14A) and the others are located on the lateral section 63 of the friction-reducing ship 61. Compressed air is delivered to a plurality of jetting devices 65a, 65b, 65c disposed along the bottom section 62 and blown through the air jet outlets 67 into water to produce the bottom micro-bubbles 64A. Similarly, compressed air is delivered to a plurality of jetting devices 66a, 66b, 66c provided on the lateral hull surfaces 63 where the flow lines direct the lateral micro-bubbles 64B from the bow section towards the stern section of the friction-reducing ship 61. The size of the lateral micro-bubbles 64B are made smaller than the bottom micro-bubbles 64A.

Also, the size of the bottom micro-bubbles 64A is adjusted according to the thickness of the boundary layer formed along the bottom section 62 such that the size increases from the bow section towards the stern section of the friction-reducing ship 61. The size of the lateral micro-bubbles 64B may be about 500 μm.

Smaller lateral micro-bubbles 64B may be produced by adjusting the air flow rate (according to MENG formula) or by using a wire method or a three dimensional vane method.

The wire method is illustrated in Figures 15A and 15B. A wire 68 is positioned upstream of a slit-shape air jet outlet 67 at about 1~2 mm away from the lateral section 63. When the friction-reducing ship 61 is cruising, the wire 68 produced flow turbulence which breaks up the compressed air 64 blown from the air jet outlet 67 to produce the micro-bubbles.

The three-dimensional vane method is illustrated in Figure 16. A laminar protrusion section 69 having a streamlined protrusion profile, and fine air jet outlet holes 70 are provided on the apex section 69a of the laminar protrusion section 69. The micro-bubble size is reduced by the effect of flow speed change as the main flow which flows along the lateral hull surface passes by the laminar protrusion section 69 and breaks up the compressed air 64 being blown out of the air jet outlet 70.

When the friction-reducing ship 61 reaches a cruising speed, the compressed air 64 is ejected from each jet outlet, and the bottom micro-bubbles 64A produced through the jetting devices 65a, 65b and 65c provided on the bottom section 62 sweep along the bottom section 62 towards the stern section. In the meantime, the lateral micro-bubbles 64B produced from the jetting devices 66a, 66b, 66c provided on the lateral cection 63 are swept with the flow lines heading towards the bottom section 62, where closer the micro-bubbles 64B are to the stern section closer they flow along the lateral hull surfaces.

Accordingly, the bottom micro-bubbles 64A and the lateral micro-bubbles 64B are produced on the submerged surfaces of the friction-reducing ship 61. The lateral micro-bubbles 64B injected into the lateral boundary layer is smaller than the bottom micro-bubbles 64A injected into the bottom boundary layer, and therefore, the dwell time of the lateral micro-bubbles 64B in the lateral boundary layer can be prolonged. It follows that the present method enables the average void fraction in the lateral boundary layer to be raised higher than the average void fraction achievable by conventional methods, and therefore skin friction is also reduced.

The present inventors have previously established a quantitative relation that the average void fraction is increased by making the size of lateral micro-bubbles 64B as small as possible in those regions where the boundary layer thickness is large, and disclosed the findings in a Japanese Patent Application, First Publication, H8-144646.

The sizes of the bottom micro-bubbles 64A produced on the bottom section 62 are varied according to the boundary layer thickness, in such a way that larger bottom micro-bubbles 64A are found towards the stern section of the friction-reducing ship 61. This arrangement produces effective and high void fraction ratios to reduce skin friction.

It was mentioned earlier that, unlike the bottom micro-bubbles 64A, the lateral micro-bubbles 64B are affected only by the lift force to push them towards the lateral hull surfaces. Therefore, it has been confirmed that, for the lateral micro-bubbles 64B, high void fractions are obtained when the bubble size is in the neighborhood of 500 μm. It has also been established that, when the size of the lateral micro-bubbles 64B is very small, 100 μm for example, turbulent flow effects on the bubbles are greater than the lateral push effects on the bubbles, and that such small bubbles are quickly dispersed away. In the above embodiment, the number of lateral air jet outlets is increased to compensate for making the lateral micro-bubbles 64B smaller.

It should be mentioned that the shape of the air jet outlets is not limited to the slit shape shown in Figures 15A, 15B or fine holes shown in Figure 16, other forms such as perforated plate and porous plates can also be used.

The features of Embodiment 5 are summarized as follows.

a. Friction reduction effects are created by two arrangements: first, bottom micro-bubbles are produced from air jet outlets disposed in several locations of the bottom sections of the friction-reducing ship in such a way the micro-bubbles are ejected along the bottom surface; and second, lateral-bubbles whose size is smaller than the bottom micro-bubbles are produced from several lateral locations of those regions of the submerged bow section where the flow lines head from the bow towards the stern section. This leads to increasing dwell time for the lateral micro-bubbles, and average void fraction is increased and the friction reduction effects are enhanced.

b. Jetting conditions are adjusted so that the size of the bottom micro-bubbles increase towards the stern section in accordance with the thickness of the bottom boundary layer so that effective and high void fraction can be obtained.

F. Embodiment 6

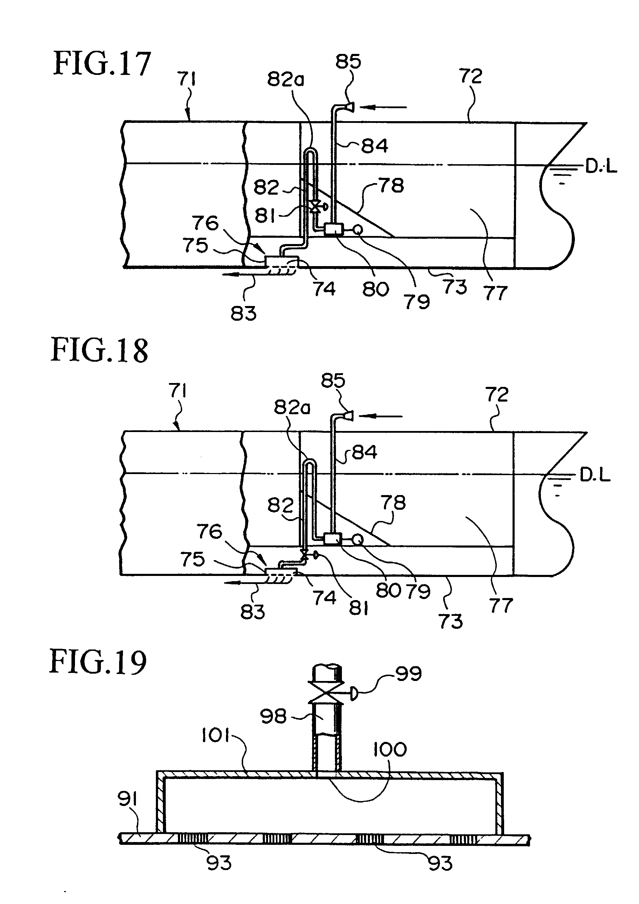

Embodiment 6 relates to a friction reduction apparatus for a friction-reducing ship, and will be presented with reference to Figures 17 and 18.

As shown in Figure 17, a friction-reducing ship 71 is provided with a plurality of air outlets (fine holes) 74 on the bottom hull plate 73 of the bow section 72, and air jetting devices 76 are provided so that the air jet outlets 74 are enclosed in a watertight seachest housing 75 on the inside of the bottom hull plate 73. A blower 80 (air supply device) is provided in the hold space 77 formed by a slanted plate 78, and is disposed below the level of the waterline D.L in the bottom section. The blower 80 is driven by a generator 79.

The blower 80 is connected to the seachest housing 75 through an air supply pipe 82 having an air flow adjusting valve 81 so as to deliver compressed air into the seachest housing 75. The air flow adjusting valve 81 is adjusted so that the internal pressure in the seachest housing 75 measured by a pressure gauge (not shown) will be higher than the external hydrostatic pressure. Compressed air is blown into the water through the air jet outlets 74 and produces the micro-bubbles 83 to blanket the bottom surface of the friction-reducing ship 71. Air for the blower 80 is supplied through an intake pipe 84 having an intake opening 85 located on-deck.

The mid-portion of the air supply pipe 82, installed vertically in the hold section 77, is bent in an inverted U-shape and this ∩-section 82a is disposed so that it will be above the waterline D.L (at full load), and also, the ∩-section 82a is downstream (in the direction of compressed air flow) of the air flow adjusting valve 81.

This arrangement is provided for the following reason. When the blower 80 is stopped, air supply pressure for compressed air to be supplied through the air supply pipe 82 to the jetting devices 76 is no longer available, and the pressure differential between the external hydrostatic pressure at the air jet outlet 74 causes the water to back up into the air supply pipe 82. The water rises through the upright portion of the air supply pipe 82, but will not rise above the full load waterline level D.L, so the water does not rise up to through ∩-section 82a to reach the blower 80.

In other words, there is no need to totally shut off the flow adjusting valve 81 when the blower is stopped, or even if the flow adjusting valve cannot be shut off, the air supply pipe 82 can still function as the water barrier to the blower 80. Therefore, there is no need to carry out preliminary operation of the blower 80 by fully closing the air flow adjusting valve 81, thereby resulting not only in energy saving but in convenience that the blower 80 can be started or stopped without regard to external hydrostatic pressure.

Also, there is no need for constant monitoring of the internal pressure of the seachest housing 75 during the startup, so the need for pressure gauge for the seachest housing 75 is eliminated, thus resulting in a simpler structure and installation.

Because the ∩-section 82a is located downstream of the air flow adjusting valve 81, so that, even if the blower 80 is stopped, water will not backup into the air flow adjusting valve 81, thus enabling to inspect the air flow adjusting valve 81 while the ship is cruising.

This embodiment is not limited to the example shown, and following variations are possible.

    a. In the above embodiment, the ∩-section 82a was located downstream of the air flow adjusting valve 81, but as shown in Figure 18, the ∩-section 82a may also be placed upstream of the air flow adjusting valve 81 to stop water backing up into the blower 80.

    b. In the above embodiment, the air supply pipe 82 was shown upright, but it can be shaped to accommodate other components in the interior of the friction-reducing ship 71.

    c. The location of air jetting device 76 is not limited to the bow section.

    d. In the above embodiment, the location of the blower 80 was in the space below the slanted plate 78 in the hold section 77, but other locations are allowable.

    e. Air supply device other than blower 80 may also be used.

## G. Embodiment 7.

Embodiment 7 relates to a gas jetting device for a friction-reducing ship and will be presented with reference to Figures 19~21B.

A plurality of air jetting sections 93 are arranged in a line transversely across the width or along the longitudinal direction of the ship so that all the air jetting sections 93 are enclosed from inside of the bottom hull plate 91 in a watertight seachest housing 101, made of channel shaped steel, attached to the interior of the bottom hull plates 91. Compressed air is supplied from one air supply opening 100 provided in the transverse mid-section of the seachest housing 101, and attached to the air supply pipe 98 having a flow adjusting valve 99 of an air supply pipe. This arrangement distributes compressed air transversely to all the air jetting sections 93 within the seachest housing 101.

Compressed air delivered through the air supply pipe 98 to the interior of the seachest housing 101 is distributed transversely in the seachest housing 101 to be delivered to each of the lined-up air jetting sections 93 and is ejected into water to blanket the bottom surface of the friction-reducing ship.

The seachest housing 101 extends lengthwise in the direction of the air jetting sections 93 and is shared by all the air jetting sections 93, thus eliminating the necessity for providing individual housing to each air jetting section 93. Because of the lengthwise shape of the seachest housing 101, there is little air resistance, and one air supply pipe 98 is sufficient to supply air to all the air jetting sections 93. Thus, installation step and costs are greatly reduced.

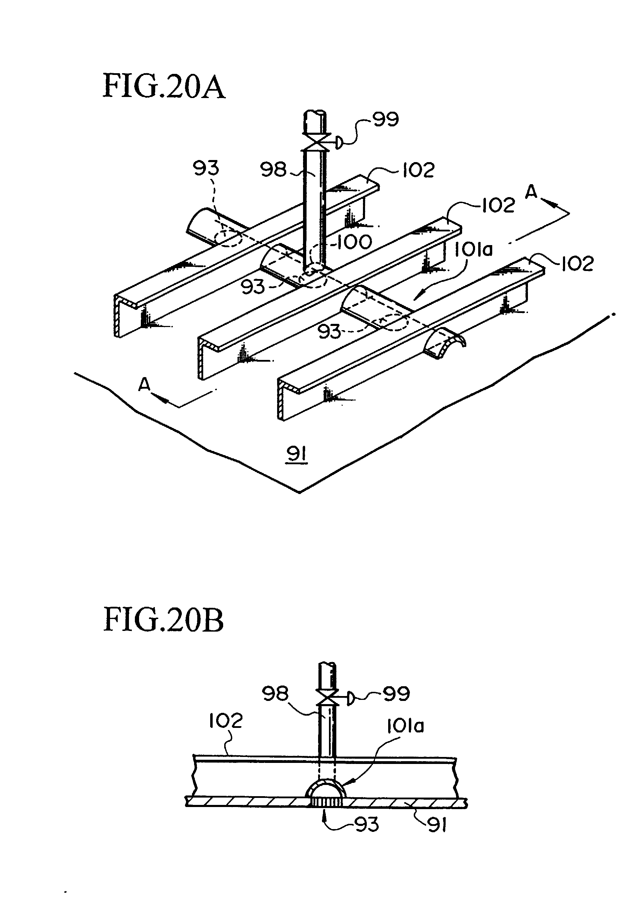

Variations of the embodiment will be shown in Figures 20A and 20B. Variations are applicable when there are longitudinal ribs 102 shown in Figure 20A.

Similar to the embodiment presented above, a plurality of air jetting sections 93 are arranged in a line transversely across the width direction of the ship so that all the air jetting sections 93 are enclosed from inside of the bottom hull plate 91 in a seachest housing 101a passing through a longitudinal rib 102, made of split-pipe shaped steel, attached watertightly to the interior of the bottom hull plates 91. Compressed air is supplied from one air supply opening 100 provided in the transverse mid-section of the seachest housing 101a, and attached to the air supply pipe 98 having the flow adjusting valve 99 of an air supply pipe. This arrangement distributes compressed air transversely to all the airjetting sections 93 within the seachest housing 101a.

The height of the cutout to accommodate the split-pipe seachest 101a in the longitudinal rib 102 should be chosen carefully so as not to lower the required strength level of the longitudinal rib 102 in the longitudinal direction. It should be sufficiently short in comparison to the height of the longitudinal rib 102. The cross sectional shape of the seachest 101a may be a channel shape.

Compressed air delivered through the air supply pipe 98 to the interior of the seachest housing 101a is distributed transverse to the friction-reducing ship across the seachest housing 101a to be delivered to each of the transversely arranged the air jetting sections 93 and is ejected into water to blanket the bottom surface of the friction-reducing ship. Therefore, this arrangement permits the basic air delivery system to be applied even for a ship having longitudinal ribs 102.

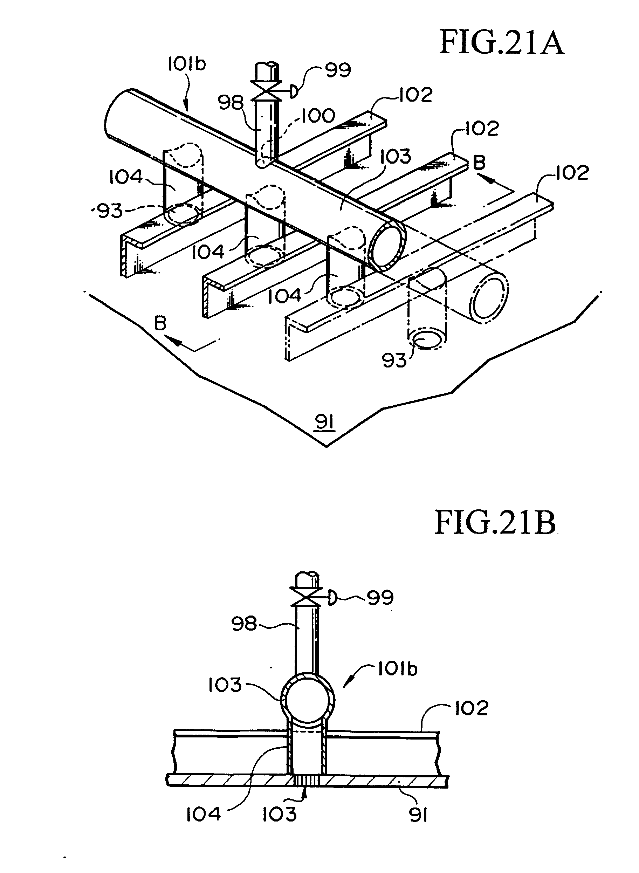

Another variation of the basic arrangement of Embodiment 7 will be presented with reference to Figures 21A and 21B.

A plurality of air jetting sections 93 are arranged along a line in the transverse direction on each longitudinal ribs 102 on the bottom hull plate 91. A cylindrical air header 103 extending horizontally and transversely across the width of the friction-reducing ship is provided above the air jetting sections 93 and higher than the longitudinal ribs 102. The air header 103 and the air jetting sections 93 are connected with air distribution pipes 104 to form a seachest housing 101b. One air supply opening 100 is provided in the longitudinal mid-section of the header 103 and is connected to the air supply pipe 98 to deliver compressed air within the header 103 to be ejected from the air jetting sections 93.

An advantage of this variation is that, because the seachest housing 101b straddles the longitudinal ribs 102, there is no need to cut out the longitudinal ribs 102.

Other variations are as follows.

    a. Shape and area and other design of the air jetting section 93 should be chosen to produce desired size of micro-bubbles to produce the blanketing action.
    b. In the above embodiment, seachest housings 101, 101a, 101b are attached in whole, but they can have divisions along the longitudinal direction or separated into separate sections so that each section is supplied with separate air supply and serves at least two jetting sections. This arrangement permits different air flow rates to be produced from different sections.

H. Embodiment 8

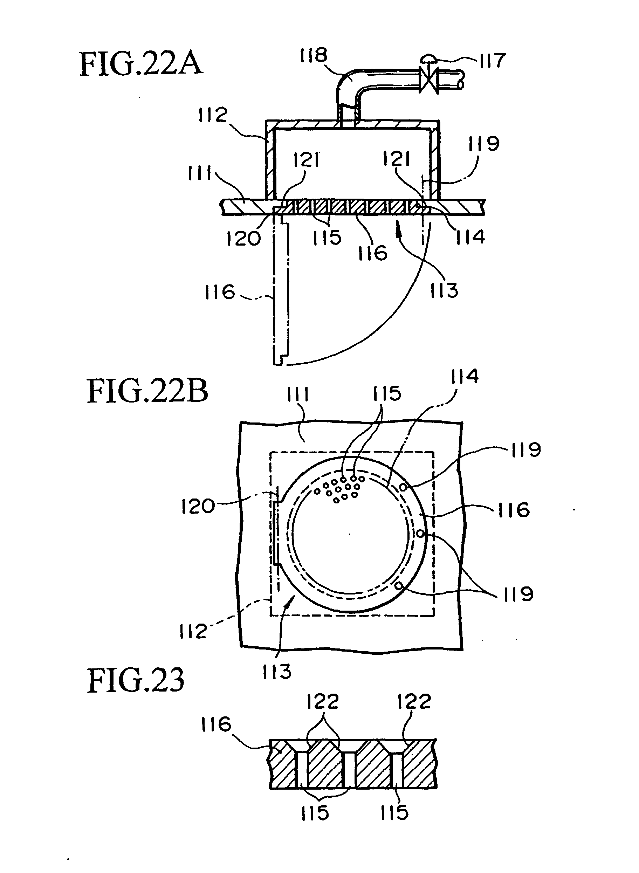

Embodiments 8 relates to a gas jetting device for a friction-reducing ship, and will be presented with reference to Figures 22A~25C.

In this embodiment, the air jetting section 113 is constructed by attaching a perforated plate 116 having numerous air jet outlets 115 by bolts 119 to an opening section 114 provided on the bottom hull plate 111. The perforated plate 116 is attached to the opening section 114 in such a way to enable the opening section 114 to swing to open outward or close about a hinge 120, which is provided on one outer periphery of the perforated plate 116. The remaining peripheries (three in Figure 22B) of the perforated plate 116 are attached by bolts 119.

The peripheries of the perforated plate 116 and the opening section 114 are provided with a step surface so that the perforated plate 116 can be fitted therein from below, and the step surface is opposed by a seal ring 121. Other structures are the same as in conventional jetting devices.

To perform maintenance on the interior of the air jetting section 113, the bolts 119 are first removed, and as shown by a double dotted line, the perforated plate 116 is opened downward about the hinge 120 to expose the opening section 114. The interior of the seachest housing 112 and the inside surface of the perforated plate 116 can thus be accessed for cleaning. For example, when performing underwater inspection, the open tip of the air supply pipe 118 can be plugged before disassembling the flow adjusting valve 117.

After completing the maintenance work so, the perforated plate 116 is swung upward about the hinge 120 to close the opening section 114 and re-install the bolts 119. By using the hinge 120, the number of bolts 119 which must be handled for removing/closing operations can be reduced significantly compared with the conventional designs, thereby significantly reducing the effort required in maintenance work.

Also, as shown in Figure 23, the upper end of the perforated plate 116 can be countersunk to produce a tapered section 122, thereby reducing the upper plane area of the perforated plate 116 to facilitate removal of water from the interior of the jetting devices.

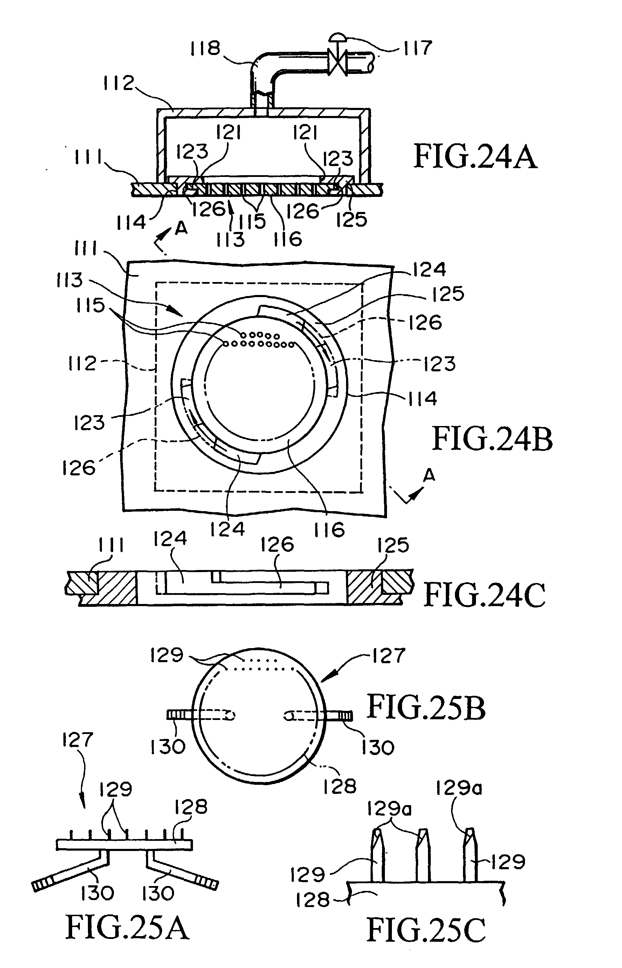

Variations will be presented with reference to Figures 24A~24C. The air jetting section 113 provided on the opening section 114 of the bottom hull plate 111 is comprised by the perforated plate 116. the seachest housing 112 with one air supply pipe 118 encloses a plurality of air jetting sections 113. The perforated plate 116 is coupled to the opening section 114 by means of a pair of radially opposite integrally formed knobs 123 provided on opposite diametrical ends of the perforated plate 116. A circular support metal member (ring)125 provided corresponding cutouts 124 to close the perforated plate 116 from below the opening section 114 is attached on the opening section 114 of the bottom hull plate 111. The knobs 123 are engaged with the corresponding cutouts 124 provided on the outer periphery of the opening section 114 so that the knobs 123 are coupled in the channel shaped engaging grooves 126. The engaging grooves 126 are shaped in such a way that the radius is reduced in the circumferential direction of the engaging groove 126 so that when the perforated plate 116 is rotated in the engaging groove 126 to engage the knobs 123 inside the engaging groove 126, the perforated plate 116 is held in place by contact friction.

The perforated plate 116 may be coupled to or decoupled from the opening section 114 by using a coupling jig 127. The use of the coupling jig 127 will be explained with reference to Figures 25A to 25C.

The coupling jig 127 has a support circular plate 128 of about the same size as the perforated plate 116 and numerous pins 129 to correspond with the locations of the air jet outlets 115 on the perforated plate 116. A pair of outwardly extending radial handles 130 are provided on the bottom surface of the support circular plate 128 so that the pins 129 engaged in the air jet outlets 115 will aid in forcing the perforated plate 116 to rotate. It should be noted that the ends of the pins 129 are spiraled to form edges 129a.

To perform maintenance work on the interior of the jetting devices, the pins 129 of the coupling jig 127 are inserted into the air jet outlets 115 of the perforated plate 116, and after the support circular plate 128 is tightly coupled to the perforated plate 116, the handle 130 are rotated to rotate the support circular plate 128, thereby rotating the perforated plate 116 so that the knobs 123 of the perforated plate 116 engaged in the engaging grooves 126 are rotated into position of the cutouts 124. The knobs 123 are rotated passed the cutouts 124 and the plate 116 can now be lowered to remove the perforated plate 116 from the opening section 114. After cleaning the interior of the jetting devices through the opening section 114, the perforated plate 116 is reattached to the opening section 114 by reversing the above procedure.

In the above embodiment, because the coupling jig 127 exerts rotation through many pins 129 via the handles 130, a large turning torque can be applied to the perforated plate 116, thereby facilitating the coupling/decoupling operation. Also, because the pins 129 are provided with edges 129a, all the air jet outlets 115 can be cleaned at the same time by insertion of the pins 129 into the holes of the air jet outlets 115.

Accordingly, coupling/decoupling of the perforated plate 116 from the opening section 114 is performed by simple rotation of the perforated plate 116, maintenance effort can be reduced further.

It should be noted that the present invention is not limited to the embodied examples given above, and other possibilities may be considered as follows.

> a. The shape of the opening section 114 and the perforated plate 116, with the hinge 120 and attachment with the bolts 119, can be made rectangular.
> b. In the above embodiment, the perforated plate 116 was provided with a pair of opposing knobs 123, but such knobs may be provided in three, four or more locations depending on the size of the perforated plate 116.
> c. The engaging groove 126 may be formed in such a way that the direction of rotation of the plate 116 for decoupling is opposite to the cited example.
d. The shape of the tapered section 122 for the air jet outlets 115 may also be applied to the striker shown in Figures 24A~24C.

## Claims

1. A friction-reducing ship for reducing skin friction by ejecting a gas into water from gas jet outlets, provided on submerged surfaces of outer hull plates, wherein a laminar protrusion of a streamlined shape is provided on said outer hull plates, and said gas jet outlets are spaced apart on an apex region of said laminar protrusion.

2. A friction-reducing ship according to claim 1, wherein said gas jet outlets are spaced apart and are oriented so as to eject gas at right angles to water flow lines passing over said laminar protrusion.

3. A friction-reducing ship according to one of claims 1 or 2, wherein said laminar protrusion is shaped such that a distance between said apex region to a downstream end of said laminar protrusion is greater than a distance between said apex region to an upstream end of said apex protrusion.

4. A friction-reducing ship for reducing skin friction by ejecting a gas into water from gas jet outlets, provided on submerged surfaces of outer hull plates, wherein each micro-bubble jetting device is manufactured as a unitized component including a portion of hull plate, and said micro-bubble jetting device is produced by using a plurality of unitized components.

5. A friction-reducing ship according to claim 4, wherein a plurality of said unitized components are controlled by a start signal and a stop signal issued by a central command section, and said micro-bubble jetting device is comprised by: a hydrostatic pressure measuring device for measuring an external hydrostatic pressure in a vicinity of said gas jet outlets; an air pressure measuring device for measuring an air pressure delivered to said gas jet outlets; and a jetting control section for controlling gas jets based on data output by said hydrostatic pressure measuring device and said air pressure measuring device; wherein, upon receiving said start signal, the jetting control section maintains a condition for generating micro-bubbles that an air pressure being measured by said air pressure measuring device is higher than an external hydrostatic pressure being measured by said hydrostatic pressure, and upon receiving said stop signal, the jetting control section begins a process to stop generating micro-bubbles.

6. A compressed air generation apparatus for a friction-reducing ship for reducing skin friction by ejecting a gas into water from gas jet outlets, provided on submerged surfaces of outer hull plates, wherein a micro-bubble jetting device and an outer hull plate are made into a unitized component by joining piping means for delivering said gas to said gas jet outlets.

7. A gas jetting device for a friction-reducing ship, wherein a common seachest housing, assembled in a transverse direction to straddle longitudinal ribs laid along a bottom hull plate of the friction-reducing ship, encloses a plurality of gas jetting sections disposed in a transverse direction so as to deliver a compressed gas, to be ejected to all said plurality of gas jetting sections through a common gas supply pipe.

8. A gas jetting device according to claim 7, wherein said seachest housing is divided into transverse compartments in such a way that each compartment has not less than two gas jetting sections and a common air supply pipe to serve said not less than two gas jetting sections.

9. A gas jetting device according to one of claim 7 or 8, wherein said gas jetting section includes an opening section provided on a bottom hull plate and a perforated plate detachably attached to said opening section.

10. A gas jetting device according to claim 9, wherein said opening section includes a reinforcing doubler plate.

11. A gas jetting device for a friction-reducing ship, comprised by a plurality of gas jetting sections for ejecting a compressed gas from a bottom hull plate disposed along a longitudinal line, wherein all jetting devices are housed internally in a common long seachest housing so as to be served by one air supply pipe.

12. A gas jetting device for a friction-reducing ship, comprised by a plurality of gas jetting sections, for ejecting a compressed gas from a bottom hull plate disposed in a transverse direction, housed in a transversely extending common seachest housing, made of a channel shaped steel sheet, assembled to pass through longitudinal ribs along a bottom section, and served by one gas supply pipe.

13. A gas jetting device for a friction-reducing ship, comprised by a plurality of gas jetting sections, for ejecting a compressed gas from a bottom hull plate disposed in a transverse direction, housed in a seachest housing comprised by a gas header connected to a gas supply pipe so as to be above said transverse direction and higher than longitudinal ribs of bottom sections, and gas distribution pipes connecting said gas header with said plurality of gas jetting sections.

14. A gas jetting device, for a friction-reducing ship, comprised by a gas jetting section including a bottom opening section provided on a bottom hull plate of the friction-reducing ship, a perforated plate for sealing said bottom opening, and an interior seachest housing enclosing said gas jetting section so as to eject compressed air delivered through an air supply pipe from said gas jetting section, wherein a part of outer periphery of said perforated plate is attached to a periphery of said bottom opening so as to be freely swinging about a hinge means while remaining outer peripheries of said perforated plate are attached with removable fastener means.

15. A gas jetting device, for a friction-reducing ship, comprised by a gas jetting section including a bottom opening having a support metal member attached to a bottom hull plate, a perforated plate for sealing said bottom opening, and an interior seachest housing enclosing said gas jetting section so as to eject compressed air delivered through an gas supply pipe from said gas jetting section, wherein, for a secure closure of said bottom opening, said perforated plate is provided with knobs integrally formed on an outer periphery, to be inserted into corresponding cutouts provided around an inner periphery of said support metal member, and rotated in an engaging groove formed in a circumferential direction of said support metal member.

16. A gas jetting device according to one of claim 14 or 15, wherein each of gas jet outlet on said perforated plate is provided with an inner tapered section in a form of a countersink.

17. A friction-reducing ship having nozzle blocks of a given opening width assembled at specific locations including at least a bottom hull plate for producing micro-bubbles for reducing skin friction, wherein said nozzle block comprises a bow-side wall and a stern-side wall of respective curvatures oriented towards a stern section of the friction-reducing ship, so that a tangent to an exiting peripheral curvature of said stern-side wall coincides with an outer surface of said bottom hull plate.

18. A friction-reducing ship according to claim 17, wherein a radius of curvature R1 of said bow-side wall and a radius of curvature R2 of said stern-side wall are related by an expression R1>R2.

19. A friction-reducing ship according to claim 17, wherein a radius of curvature R1 of said bow-side wall and a radius of curvature R2 of said stern-side wall are related by an expression R1=R2.

20. A friction-reducing ship for reducing skin friction by jetting gas into water from a plurality of longitudinal locations on a bottom section and from a plurality of locations in a vicinity of a bow section, wherein gas jet outlets are operated in such a way that lateral micro-bubbles, generated near lateral hulls and guided from the bow section to the stern section, are smaller than bottom micro-bubbles generated at bottom sections.

21. A friction-reduction ship according to claim 20, wherein said gas jet outlets are operated so as to generate micro-bubbles of a size range optimized with respect to various thickness of boundary layers forming from a bow section to a stern section .

22. A friction reduction apparatus for a friction-reducing ship for reducing skin friction by jetting gas into water, comprised by a gas supply pipe and a seachest housing provided on an interior bottom section below a full-load waterline and housing a plurality of gas jet outlets operating in association with gas flow adjusting valves to eject a compressed gas into water; wherein a mid-section of said gas supply pipe is positioned upright so as to be above said full-load waterline.

23. A friction reduction apparatus according to claim 22, wherein said mid-section is positioned so as to be downstream of said gas flow adjusting valves with respect to a gas flow direction.

# FIG.1

# FIG.2

## FIG.3A

## FIG.3B

# FIG.4

FRICTION REDUCTION RATIO
VS. DISTANCE TO SECTIONS
Cf/Cf0

SECTIONS

—◆— 0.223    EXAMPLE 1
—■— 0.383    EXAMPLE 2
—▲— 0.50     EXAMPLE 3
—✕— 0.772    EXAMPLE 4
---- 0.46 (FLAT PLATE) COMPARISON1
—·— 0.88 (FLAT PLATE) COMPARISON2

EP 0 903 287 A2

# FIG.5

FIG.6

FIG.7

# FIG.8A

# FIG.8B

## FIG.9A

## FIG.9B

FIG.10A

FIG.10B

FIG.10C

## FIG.11

51    52

53    A    55

## FIG.12

55    R₁    57    56

R₂    53

B    B    60

59    58    54

## FIG.13

54    H

55    L

FIG.14A

FIG.14B

FIG.15A

FIG.15B

FIG.16

FIG.17

FIG.18

FIG.19

## FIG.20A

## FIG.20B

FIG.21A

FIG.21B

FIG.22A

FIG.22B

FIG.23

FIG.24A

FIG.24B

FIG.24C

FIG.25B

FIG.25A

FIG.25C